(19) Europäisches Patentamt
European Patent Office
Office européen des brevets

(11) **EP 0 542 518 B1**

(12) **EUROPEAN PATENT SPECIFICATION**

(45) Date of publication and mention
of the grant of the patent:
**12.03.1997 Bulletin 1997/11**

(51) Int Cl.⁶: **G09G 3/36**, G02F 1/137,
G02F 1/1337

(21) Application number: **92310279.2**

(22) Date of filing: **11.11.1992**

(54) **Liquid crystal element and driving method thereof**

Flüssigkristallelement und Steuerverfahren dafür

Elément à cristal liquide et sa méthode de commande

(84) Designated Contracting States:
**DE FR GB NL**

(30) Priority: **11.11.1991 JP 294489/91**

(43) Date of publication of application:
**19.05.1993 Bulletin 1993/20**

(73) Proprietor: **SHARP KABUSHIKI KAISHA
Osaka 545 (JP)**

(72) Inventors:
• **Minamihara, Tsugiko
Sakai-shi, Osaka (JP)**

• **Kuratate, Tomoaki
Kobe-shi, Hyogo (JP)**
• **Matsumoto, Toshio
Tenri-shi, Nara (JP)**

(74) Representative: **White, Martin David et al
MARKS & CLERK,
57/60 Lincoln's Inn Fields
London WC2A 3LS (GB)**

(56) References cited:
**EP-A- 0 176 763        EP-A- 0 307 959
EP-A- 0 318 050        EP-A- 0 362 948
EP-A- 0 448 105**

Printed by Jouve, 75001 PARIS (FR)

## Description

BACKGROUND OF THE INVENTION

The present invention relates to a liquid crystal element and a method for driving the liquid crystal element, and more particularly to a liquid crystal element formed by combining a ferroelectric liquid crystal with an active matrix substrate and a driving method thereof.

Description of the Related Art

A liquid crystal element is widely used in watches, electronic calculators, office machines such as word processors and personal computers, portable television sets and the like.

In particular, a high-quality display element is demanded, which is capable of displaying a large volume of images. As a display element capable of displaying a large volume of highest quality images, there is generally known a liquid crystal display element formed by combining a twisted nematic (TN) liquid crystal with an active matrix substrate having a thin film transistor (TFT) arranged in a matrix configuration.

However, a liquid crystal display of this kind has a great drawback of a narrow visual angle, which is peculiar to the TN display. As far as this display system is used, the drawback can not be largely improved. In addition, lowering a driving voltage is strongly demanded for economic advantage.

Meanwhile, a ferroelectric liquid crystal is known as a liquid crystal element having a large visual angle. In principle, the absence of a definite threshold value in the ferroelectric liquid crystal allows reducing the driving voltage with a longer pulse width for a switching device. However, normal ferroelectric liquid crystal elements have a drawback of finding a difficulty in obtaining a high contrast because of the molecular motion caused by a bias voltage.

Combining a ferroelectric liquid crystal with an active matrix substrate is considered as a means of actualizing a liquid crystal display with a wide visual angle, a reduced driving voltage, and high contrast to overcome the above drawback.

Such documents as Appl. Phys. Lett., 36, 899 (1980); and US Patent No. 4367924 disclose ferroelectric liquid crystal elements using various liquid crystals having a chiral smectic C phase, a chiral smectic F phase and chiral smectic I phase. They disclose that sandwiching these ferroelectric liquid crystals with a spiral structure between liquid crystal cells thinner than the spiral pitch of the structure loosen the spiral structure.

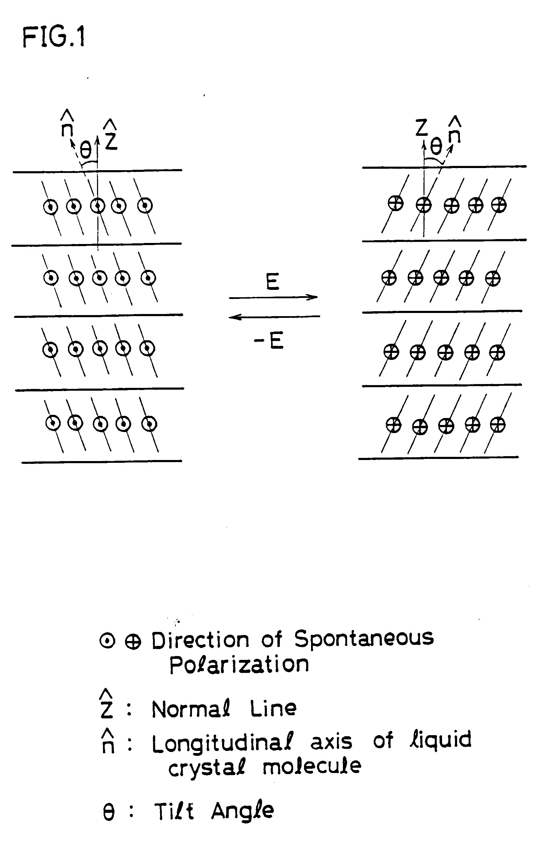

As shown in FIG. 1, liquid crystal molecules are stable in two regions. They are stable by inclining at an angle of $\Theta$ relative to a smectic layer normal line in one region while they are stable by inclining at an angle at $\Theta$ in the opposite direction thereto in the other region. Research in later years clarifies that the two regions can be created in a mixed state.

In the method therefor as shown in FIG. 1., electric potential is applied in a direction perpendicular to the paper surface, thereby producing uniform directions of liquid crystal and spontaneous polarization thereof. Besides, shifting the polarity of the applied electric fields allows switching between the two states. The switching operation causes the birefrigent light passing through the ferroelectric liquid crystal within the cell to vary. Consequently, sandwiching the above ferroelectric liquid crystal between two polarizers permits the control of transmitted light. In addition, despite de-energization of liquid crystal elements the orientation of liquid crystal molecules is kept in the same state as before the de-energization with orientation force between liquid crystal and cell surface, thereby producing a memory effect. Furthermore, a direct interruption between the spontaneous polarization in liquid crystals and in electric fields demands time in an order of $\mu$ sec fordriving the switching device, which results in a high response speed.

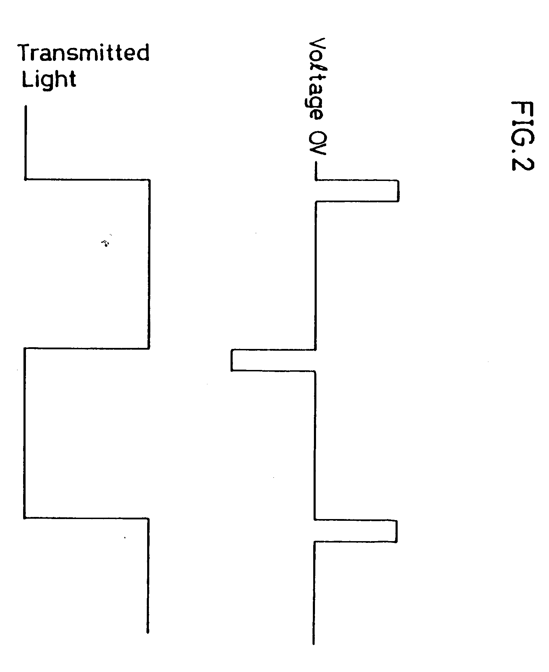

FIG. 2 shows a relation between waveforms of a voltage applied to a ferroelectric liquid crystal element and an amount of transmitted light, said ferroelectric liquid crystal element having in one of the bistable states longitudinal axis direction of molecules matched with the polarizing axis direction of polarizing plates mutually crossing at a right angle. The element is electrified with a short pulse voltage to keep memory properties. This is followed by driving the element to be kept free from electric field, thereby actualizing a preferable switching between two valves.

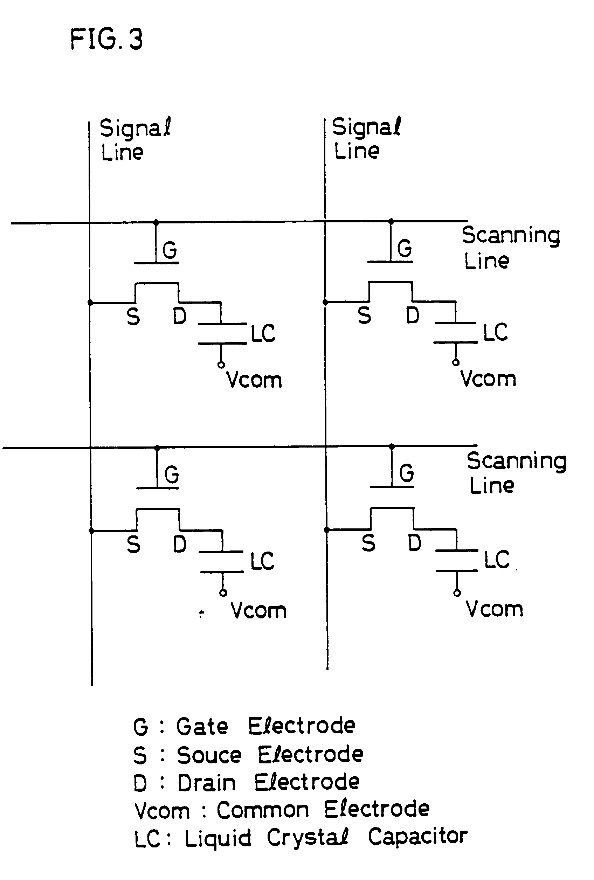

Subsequently, the active matrix substrate will be described. FIG. 3 shows an equivalent circuit of an active matrix type liquid crystal element using a thin film transistor (TFT) as a typical 3-terminal switching element.

Referring to FIG. 3, symbol G designates a gate electrode, S a source electrode, D designates a drain electrode, $V_{com}$ a common electrode, and LC a liquid crystal capacitor. When driving a liquid crystal signal is transmitted from scanning lines to apply electric field to the gate electrode, thereby turning on the TFT. Transmitting a signal from a signal line to the source electrode in synchronization with the former signal transmitted to the gate electrode results in accumulating electric charges, generating electric fields to which the liquid crystal respond.

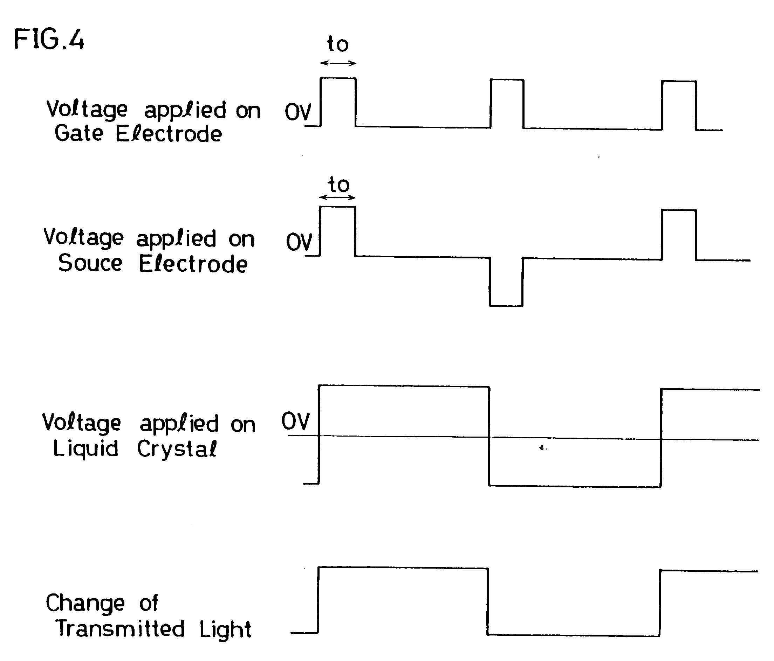

FIG. 4 shows a conventional driving waveform produced when a ferroelectric liquid crystal is used in an active matrix type liquid crystal display. By using such a driving method, the active matrix type ferroelectric liquid crystal element can be driven.

However, in the driving method shown in FIG. 4, for example, in the absence of changes in a display of a certain pixel for a long time a voltage with the same polarity is applied to the ferroelectric liquid crystal of that pixel, which presents a serious problem of reliability, making it almost impossible to form a practical display element in the above driving method.

Meanwhile, a driving method shown in FIG. 4 does not result in applying voltage exclusively with the same polarity, either positive or negative, which is preferable for the reliability of the element. However, the following problem arises in the actual display element. That is, a pulse width required for switching a typical ferroelectric liquid crystal is approximately 100 μsec at room temperature at 10V. An increase in the spontaneous polarization of the ferroelectric liquid crystal is generally required to heighten the driving speed of material. On the other hand, an increase in the spontaneous polarisation makes it difficult to afford a favorable bistable switching. An approximately 5 volts driving voltage is applied to the liquid crystal element for driving the TFT. The driving waveform generated when driving a liquid crystal element at 5 V in a pulse width of 200 μsec required for switching results in a writing time per scanning line of 600 μ sec. Actualizing a liquid crystal having 1000 scanning lines requires 600 msec for rewriting one screen. Reducing the driving voltage prolongs the rewriting time. This is poor as a rewriting time, which has to be improved to implement a high quality active matrix type ferroelectric liquid crystal element capable of displaying a large volume of images.

## SUMMARY OF THE INVENTION

According to the present invention there is provided a method of driving a liquid crystal element as defined in claim 1.

An image can be displayed on a ferroelectric liquid crystal display element of the present invention in a short time. An image can also be re-written in a short time.

FIG. 1 is a schematic view illustrating a switching of a ferroelectric liquid crystal element;

FIG. 2 is a view illustrating relations between the applied voltage and changes in an amount of transmitted light in the ferroelectric liquid crystal element.

FIG. 3 is a view showing an equivalent circuit of an active matrix type liquid crystal display;

FIG. 4 is a view illustrating a conventional driving method of an active matrix type ferroelectric liquid crystal element;

FIG. 5 is a view illustrating a first active matrix type ferroelectric liquid crystal element according to the present invention;

FIG. 6 is a view illustrating a driving method according to the present invention;

FIG. 7 is a view illustrating changes in an amount of transmitted light at each pixel in the active matrix type ferroelectric liquid crystal element driven by the first driving method according to the present invention;

FIG. 8 is a view illustrating a second driving method according to the present invention;

FIG. 9 is a view illustrating changes in an amount of transmitted light at each pixel in the active matrix type ferroelectric liquid crystal element driven by the second driving method according to the present invention;

FIG. 10 is a sectional view illustrating a structure of the active matrix type ferroelectric liquid crystal element according to the present invention; and

FIG. 11 is a view illustrating an orientation of a ferroelectric liquid crystal.

## DETAILED DESCRIPTION OF THE INVENTION

The present invention provides an active matrix type ferroelectric liquid crystal display element capable of actualizing a large capacity, a large visual angle, a low driving voltage, a high contrast and highly reliable driving.

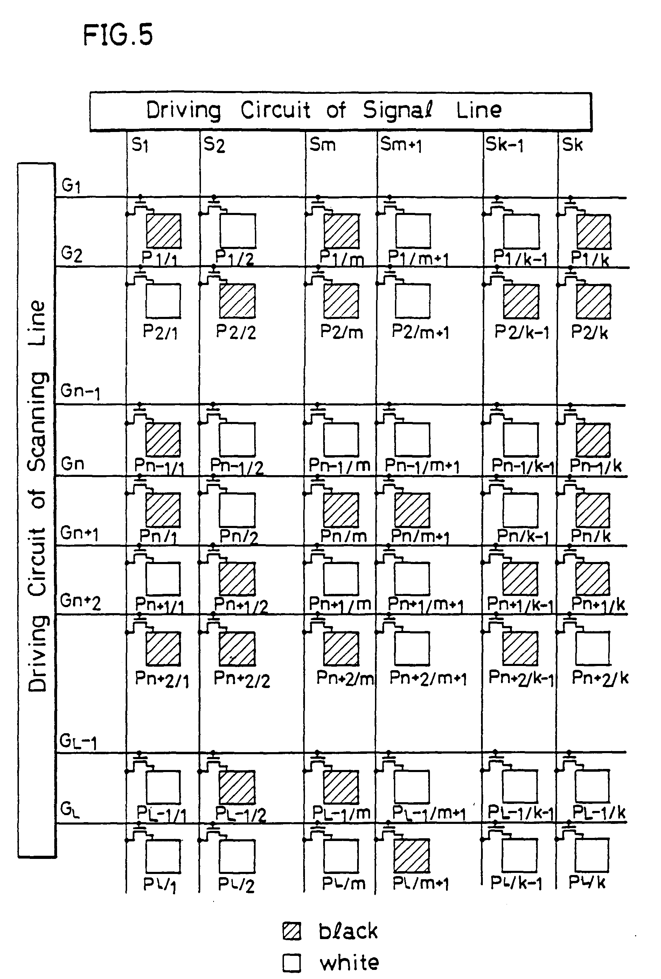

A method for driving a ferroelectric liquid crystal display element according to the present invention is described with reference to a liquid crystal display element shown in FIG. 5. The liquid crystal element shown in FIG. 5 comprises a ferroelectric liquid crystal including an active matrix substrate having L scanning electrodes $G_1$, $G_2$, ⋯, $G_{n-1}$, $G_{n+1}$, $G_{n+2}$, ⋯, $G_{L-1}$, $G_L$ and K signal electrodes $S_1$, $S_2$, ⋯, $S_m$, $S_{m+1}$ ⋯, $S_{k-1}$, $S_k$ formed in a matrix configuration and a thin film transistor (TFT) arranged at each intersection thereof. A gate electrode in the TFT at each intersection is connected to the scanning electrode and a source electrode thereof is connected to the signal electrode. Symbols $P_{1/1}$, $P_{1/2}$, ⋯, $P_{1/m}$, $P_{1/m+1}$, ⋯, $P_{n/1}$, $P_{n/2}$, ⋯, $P_{n/m}$, $P_{n/m+1}$, ⋯ shows pixels connected to a drain electrodes in the TFT formed at each intersection.

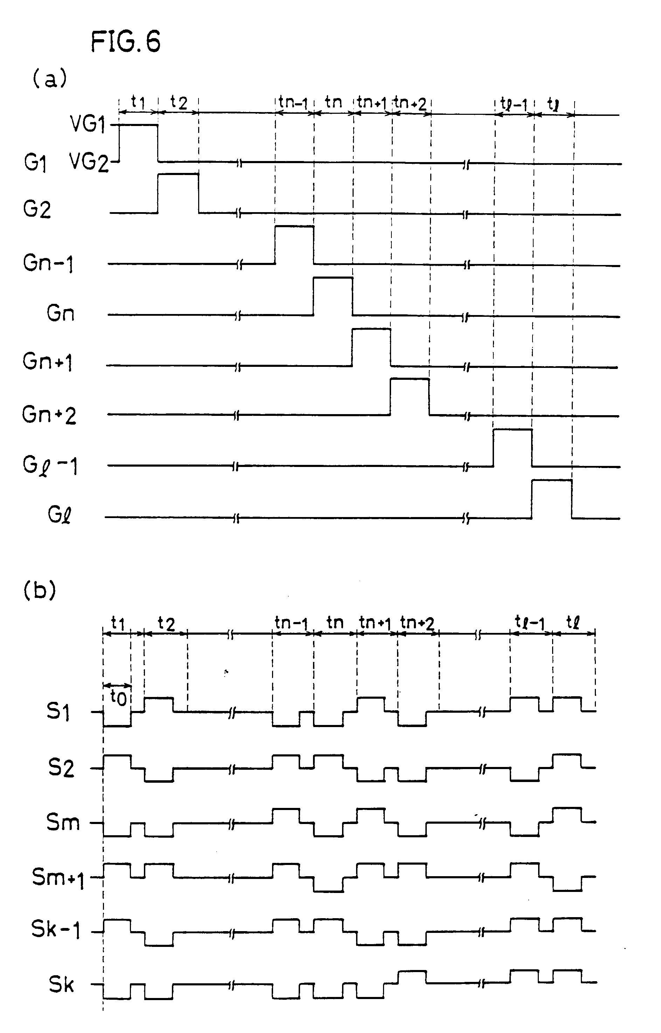

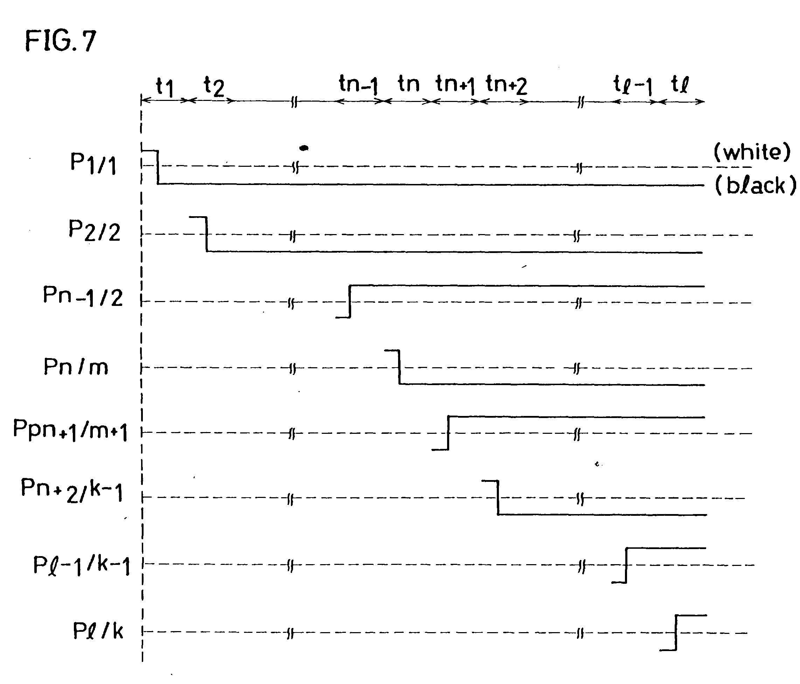

Initially, in the first method, signal waveforms shown in FIG. 6(a) and (b) are transmitted to each scanning electrode to display each pixel as shown in FIG. 5. The polarizers are disposed to display images in white upon application of a positive voltage to the ferroelectric liquid crystal while displaying images in black upon application of a negative voltage thereto. For example, FIG. 7 shows variations in amount of transmitted light in the pixels $P_{1/1}$, $P_{2/2}$, $P_{n-1/2}$, $P_{n/m}$, $P_{n+1/m+1}$, $P_{n+2/k-1}$, $P_{L-1/k-1}$, and $P_{L/k}$.

During time $t_1$ the scanning electrode $G_1$ transmit a signal to turn on the TFTs connected to $G_1$. Simultaneously while the TFTs are turned on, signal electrodes connected to the pixels $P_{1/2}$, $P_{1/m+1}$, $P_{1/k-1}$ and the like forming a white image among pixels connected to $G_1$ transmit a signal of a positive voltage $+V_0$ and then applies Ov. On the other hand, the signal electrodes connected to pixels $P_{1/1}$, $P_{1/m}$, $P_{1/k}$ and the like forming a black image among pixels connected to $G_1$ transmits a signal of a negative voltage $-V_0$ and then applies OV.

Subsequently during time $t_2$ the scanning electrode $G_2$ transmits a signal to turn on the TFTs connected to $G_2$, and the signal electrodes transmit a binary signal consisting of one portion corresponding to images displayed an another portion allowing the voltage applied to the liquid crystal to be reduced to 0 V. Then, the TFT's connected to the scanning electrodes $G_3$ to $G_L$ are turned on one after another in the same manner.

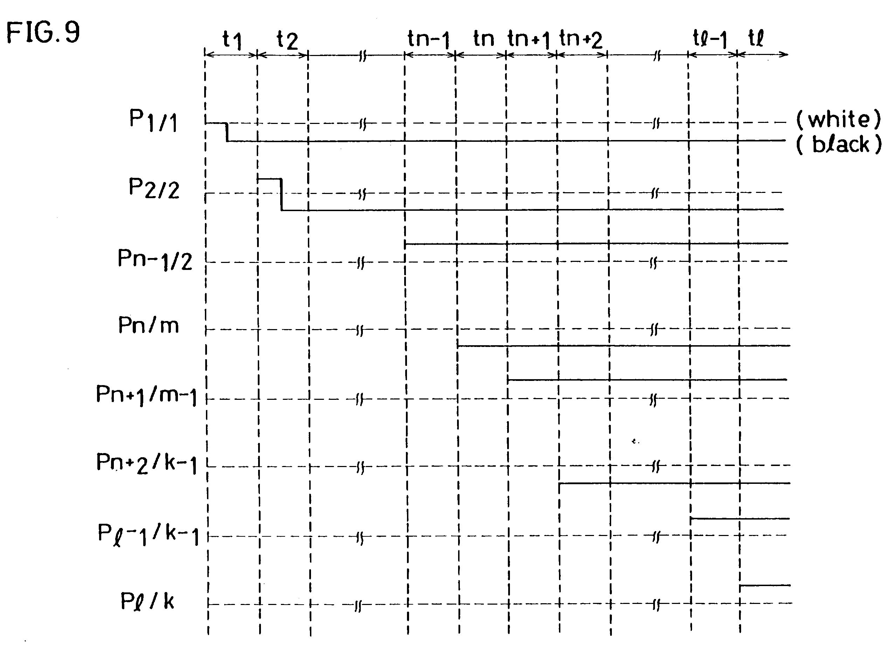

In the second method, to display images using each pixel as shown in FIG. 5, each scanning electrode receives signals having waveforms shown in FIG. 6(a) and (b). At that time, disposing polarizing plates in the same manner as the first method results in changes in the amount of transmitted light in the pixels $P_{1/1}$, $P_{2/2}$, $P_{n-1/2}$, $P_{n/m}$, $P_{n+1/m+1}$, $P_{n+2/k-1}$, and $P_{L/k}$ as shown in FIG. 9. During time $t_1$, the scanning electrode $G_1$ transmits a signal to turn on the TFTs connected to $G_1$. Simultaneously, the signal electrode connected to the pixels $P_{1/2}$, $P_{1/m+1}$, $P_{n1/k-1}$, and the like forming a white image among the pixels connected to $G_1$ transmits a bipolar signal with a negative voltage $-V_0$ and a positive voltage $+V_0$ and then applies OV.

On the other hand, the signal electrode connected to pixels $P_{1/1}$, $P_{1/m}$, $P_{1/k}$ and the like forming a black image among the pixels connected to $G_1$, receives a bipolar signal of a positive voltage $+V_0$ and a negative voltage $-V_0$ and then O V is applied thereto.

Then, during time $t_2$ the $G_2$ transmits a signal to turn on TFTs connected to $G_2$. Simultaneously, the signal electrode transmits a ternary signal consisting of one portion having a polarity opposite to the the display, another portion corresponding to the display, and another portion allowing voltage applied to the liquid crystal to be reduced to 0V. Then, the TFT's connected to the scanning electrode $G_3$ to $G_L$ are turned on one after another in the same manner.

As described above, the first driving method of the present invention is characterized by applying voltage either positive or negative, which allows voltage applied to the liquid crystal to be reduced to 0V in one cycle of turning on a switching device for one cycle of writing in memory contents. At that time, positive or negative deviation in the waveforms of voltage applied to each pixel exhibits approximately several hundreds μV Besides, the absence of DC current applied thereto for a long time makes the element of the present invention highly reliable. In erasing images, it is possible to apply a cancel voltage to erase accumulated DC current component.

The second driving method of the present invention is characterized by transmitting four signals to liquid crystal in one cycle of turning on a switching device for one cycle of writing in display contents, said four signals consisting of one corresponding to the signal, another having a polarity opposite to the display, another corresponding to the display, and the other allowing voltage applied to the liquid crystal to be reduced to 0V.

The second driving method, compared with the first, requires an excessive time of rewriting the display contents owing to a signal opposite to the display transmitted thereto. However, DC current is completely erased, which results in a improved reliability. Although time for applying a signal with an opposite polarity is additionally required in the rewriting time in the second driving method as compared with the first driving method, since the direct current component is completely canceled, it is preferable in view of reliability.

$V_s$ value varies from one specification of an liquid crystal driving LSI to another. For example 5V may be used. In the first method, a value $t_1$ is defined as (time $t_0$ required for switching the ferroelectric liquid crystal) + (time for applying 0V thereto). For example, a typical ferroelectric liquid crystal has at 10V a pulse width of approximately 100 μsec required for switching. The width increased to 200 μ sec $+ \alpha$ ($\alpha > 0$). When $\alpha$ is given as 25 μ sec, the total value exhibits approximately 225 μ sec. With L =1000, more in total to rewrite one screen image.

In the second method, a value $t_1$ is defined as (time $t_0$ required for switching the ferroelectric liquid crystal ) x 2 + (time for applying 0V thereto). Like the first method, a typical ferroelectric liquid crystal has at 10V a pulse width of approximately 100 μsec required for a switching device. Thus the total pulse width exhibits 200 μ sec $+ \alpha$. At 5V, it exhibits 200 μsec with the total exhibiting 400 μsec $+ \alpha$. When 25 μsec is temporarily given as $\alpha$. With L = 1000, 400 μsec or more is needed for rewriting one screen.

The rewriting time cannot be regarded as fast at all. The driving methods of the present invention can be applied to a partial rewriting method in which a signal is transmitted only to part on the screen which needs rewriting. In this case, only scanning electrodes and signal electrodes connected to pixels for images which needs to be rewritten receives signals, thereby presenting no serious problem in displaying images.

In addition, applying voltage to opposite electrodes allows the adjustment of voltage applied to the ferroelectric liquid crystal.

As a switching element provided at each intersection of the scanning electrode and the signal electrode, various elements are can be actualized. For example, a TFT using amorphous-Si or poly-Si, a Laddic device or a plasma address type element can be actualized. In particular, the TFT using amorphous-Si -Si or poly-Si is preferable.

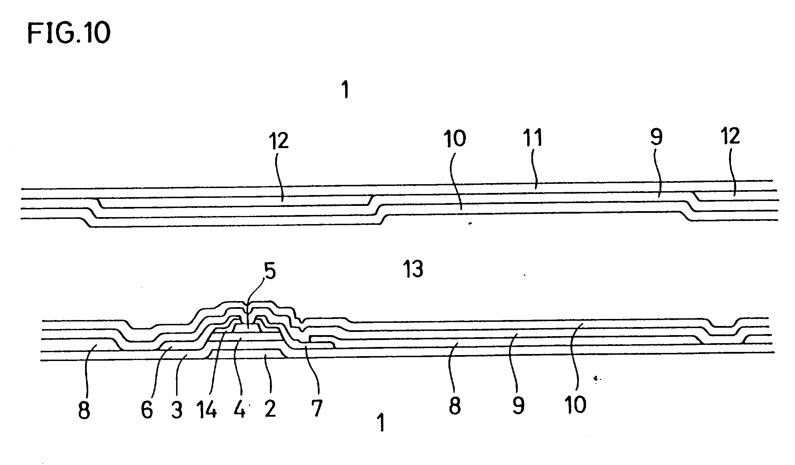

FIG. 10 is a sectional view illustrating an example of the liquid crystal element according to the present invention, said element being formed by combining the active matrix substrate using amorphous-silicon TFT with the ferroelectric liquid crystal. Referring to the FIG. 10, reference numeral 1 designates a substrate, 2 a gate electrode, 3 a gate insulating film, 4 an amorphous-silicon semiconductor film, 14 an $n^+$-amorphous-silicon film doped with phosphorus, 5 an insulating film, 6 a source electrode, 7 a drain electrode, 8 designates a pixel electrode, 9 designates an insulating film, 10 an orientation film, 11 a common electrode, 12 an opaque film, and 13 a ferroelectric liquid crystal. Although the opaque film 12 is not necessarily needed, it serves as a black matrix shielding the light at a part except for the pixels and preventing the ferroelectric liquid crystal from reverting upon the disappearance of electric field. Uniaxial orientation processing is performed on at least one of the orientation films 10 on two substrates. Although FIG. 10 shows an example of an element in a black and white display, a color display is actualized by forming a color filter on the substrate. The orientation film 10 and the ferroelectric liquid crystal is actualized by forming a color filter on the substrate. The orientation film 10 and the ferroelectric liquid crystal 14 may be formed of several kinds of materials including those already known. It is preferable to use a material and element structure capable of producing a high contrast in the element of the present invention.

As one preferable example, there will be described a liquid crystal element having a pair of substrates whose uniaxial orientation processing directions are parallel to each other, a liquid crystal phase driven exhibiting a chiral smectic C phase, a smectic layer structure in said choral smectic C phase forming a chevron structure; said element characterized by using with a driving temperature range a uniform orientation state produced either inside of a region surrounded by a lightening defect generated in the uniaxial orientation direction and a hair pin defect generated behind the lightening defect or outside of a region surrounded by a hair pin defect generated in the uniaxial direction and a lightening defect behind the hair pin defect.

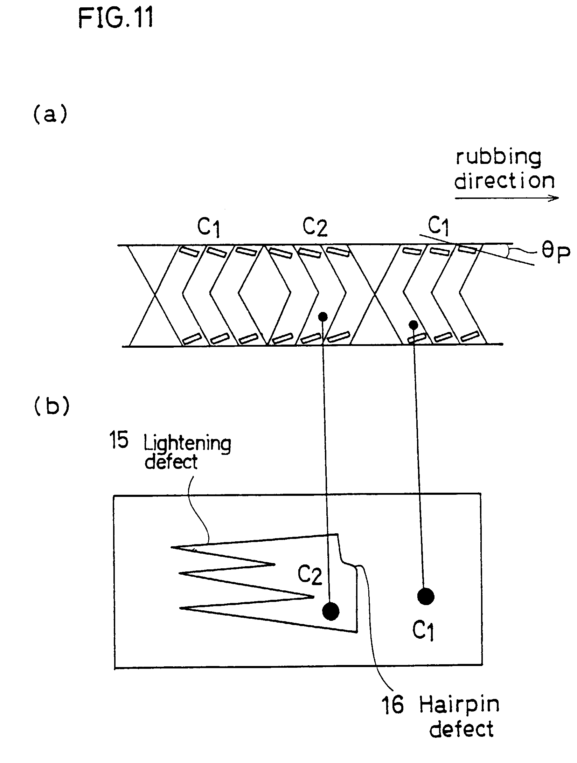

In general, the chiral smectic C phase is said to exhibit a layered structure called chevron structure as shown in Fig 11 (a). There are two chevron directions as shown in FIG. 11 (b). At a point where chevrondirections of the layer change, an orientation defect called a zigzag defect is produced. FIG. 11 (b) is a schematic view showing the zigzag defect observed through a polarization microscope. The zigzag defect falls into two kinds; a lightening defect and a hair pin defect. It has been found that the lightening defect corresponds to the layer structure of <<>> while the hair pin defect corresponds to the layer structure >><< (N.Hiji et al., Jpn.J.Appl. Phys., 27, L1 (1988)). FIG. 11 shows a relation between a rubbing direction and a pretilt angle $\Theta_p$. The above two orientations are called respectively C1 orientation and C2 orientation in view of the relation with the rubbing direction (Refer to Kanbe's articles on p 18-26, Lecture Articles Presented at a Special Meeting of the Society of Electronic Information and Communications Entitled "Optoelectronics; Liquid Crystal Display and Related Material" January, 1990). When a rubbing axis runs in the same direction as chevron direction of the layer the orientation is defined as C1 (chevron 1). When the rubbing axis runs in the direction opposite to the chevron direction the orientation is defined as C2 (chevron 2).

By the way, enlarging the pretilt angle results in a conspicuous distinction in the orientation states between C1 and C2 orientation. When the orientation film having a large pretilt angle of 8° or more (normally 8 to 30°) is used, there are observed in the C1 orientation at the higher temperature a region with a definite quenching position exhibited as well as a region with no quenching position exhibited. Meanwhile, there is observed only a region with a definite quenching position exhibited in the C2 orientation at the lower temperature. Since it is generally accepted that the presence of a quenching position distinguishes a uniform orientation from a twist orientation ("Structure and Physical Properties of Ferroelectric liquid Crystal" by Fukuda and Takezoe, Corona Co., 1990, pp.327), one exhibiting a quenching position at the C1 orientation is called C1U (C1 uniform) orientation while one exhibiting no quenching position at the C1 orientation is called C1T (C1 twist) orientation. Meanwhile only one kind of orientation is provided in the C2 orientation. When the voltage waveforms shown in FIG. 2 are applied, preferable contrast can be obtained in the C1U orientation and C2 orientation, while low contrast is provided in the C1T orientation. Since the contrast has the following properties, the C1U orientation is especially preferable in view of contrast.

$$C1U > C2 >> C1T$$

At a not so large pretilt angle $\Theta_p$, a difference in contrast between the C1U orientation and the C2 orientation is not so large. Therefore, both of the C1U orientation and C1 orientation can be used in the element of the present invention regardless of the angle $\Theta_p$.

EXAMPLES

Example 1

Liquid crystal compositions No. 201 to 203 having compositions shown in Chemical Formula was prepared using compounds No. 101 to 128 shown in the following Table. The compositions exhibited the smectic C phase at the room temperature. Table 3 shows phase transition temperature in these compositions.

Referring to the drawings, symbol C designates a crystal phase, $S_x$ smectic X phase, $S_c$ a smectic C phase, $S_A$ a smectic A phase, and I an isotropic liquid phase.

| No. | Structure | Phase Transition Temperature (°C) | | | | | |
|-----|-----------|---|---|---|---|---|---|
| | | C | $S_X$ | $S_C$ | $S_A$ | N | I |
| No. 101 | $C_7H_{15}$—(pyridine, N)—(phenyl)—$OC_7H_{15}$ | ·38 | — | — | ·47 | ·67 | · |
| No. 102 | $C_7H_{15}$—(pyridine, N)—(phenyl)—$OC_8H_{17}$ | ·49 | — | (·44) | ·57 | ·70 | · |
| No. 103 | $C_7H_{15}$—(pyridine, N)—(phenyl)—$OC_9H_{19}$ | ·46 | — | ·51 | ·57 | ·70 | · |
| No. 104 | $C_8H_{17}$—(pyridine, N)—(phenyl)—$OC_8H_{17}$ | ·29 | — | ·56 | ·62 | ·68 | · |
| No. 105 | $C_9H_{19}$—(pyridine, N)—(phenyl)—$OC_6H_{13}$ | ·24 | — | ·43 | ·70 | ·71 | · |
| No. 106 | $C_9H_{19}$—(pyridine, N)—(phenyl)—$OC_9H_{19}$ | ·35 | — | ·60 | ·75 | — | · |
| No. 107 | $C_9H_{19}$—(phenyl)—COO—(phenyl)—$OC_6H_{13}$ | ·41 | — | (·37) | — | ·64 | · |
| No. 108 | $C_8H_{17}O$—(phenyl)—COO—(phenyl)—$OC_4H_9$ | ·58 | — | ·60 | — | ·89 | · |
| No. 109 | $C_8H_{17}O$—(phenyl)—COO—(phenyl)—$OC_6H_{13}$ | ·55 | — | ·66 | — | ·90 | · |
| No. 110 | $C_8H_{17}O$—(phenyl)—COO—(phenyl)—$OC_8H_{17}$ | ·61 | — | ·73 | — | ·90 | · |

6

| | | Phase Transition Temperature (°C) | | | | | |
|---|---|---|---|---|---|---|---|
| | | C | $S_x$ | $S_c$ | $S_A$ | N | I |
| No. 111 | (S) $C_7H_{15}O$—⬡—COO—⬡—COO—$CH_2$—$\overset{*}{C}H$—$C_2H_5$ / $CH_3$ | · 3 5 | – | (· 1 9) | · 5 3 | – | · |
| No. 112 | (S) $C_8H_{17}O$—⬡—COO—⬡—COO—$CH_2$—$\overset{*}{C}H$—$C_2H_5$ / $CH_3$ | · 3 3 | – | (· 3 2) | · 5 8 | – | · |
| No. 113 | (S) $C_9H_{19}O$—⬡—COO—⬡—COO—$CH_2$—$\overset{*}{C}H$—$C_2H_5$ / $CH_3$ | · 5 6 | – | (· 3 2) | · 5 7 | – | · |
| No. 114 | (S) $C_{10}H_{21}O$—⬡—COO—⬡—COO—$CH_2$—$\overset{*}{C}H$—$C_2H_5$ / $CH_3$ | · 5 2 | – | (· 3 5) | · 6 0 | – | · |
| No. 115 | (R) $C_6H_{13}O$—⬡—COO—⬡—COO—$\overset{*}{C}H$—$C_6H_{13}$ / $CH_3$ | · 4 8 | – | – | – | – | · |
| No. 116 | $C_8H_{17}O$—⬡—COO—⬡⬡—$OC_8H_{17}$ | · 7 0 | – | · 8 3 | – | · 1 3 2 | · |
| No. 117 | $C_8H_{17}O$—⬡⬡—COO—⬡—COO—$C_8H_{17}$ | · 9 0 | – | – | · 1 1 0 | – | · |
| No. 118 | $C_5H_{11}$—⬡—COO—⬡⬡—$OC_8H_{17}$ | · 5 5 | – | (· 4 5) | · 1 0 4 | · 1 1 6 | · |
| No. 119 | (S) $C_7H_{15}O$—⬡—COO—⬡—⬡—O—$\overset{*}{C}H$—$C_6H_{13}$ / $CH_3$ | · 7 6 | (· 5 4) | · 9 2 | – | · 1 2 5 | · |

7

| No. | Structure | C | Sx | Sc | SA | N | I |
|---|---|---|---|---|---|---|---|
| No. 120 | (S) $C_7H_{15}O$—⟨⟩—⟨⟩—$COO$—$CH_2$—$\overset{*}{C}H(CH_3)$—$C_2H_5$ | ·62 | — | ·139 | ·191 | — | · |
| No. 121 | (S) $C_8H_{17}O$—⟨⟩—⟨⟩—$COO$—⟨⟩—$COO$—$CH_2$—$\overset{*}{C}H(CH_3)$—$C_2H_5$ | ·76 | — | ·144 | ·188 | — | · |
| No. 122 | $C_{10}H_{21}O$—⟨⟩—$COO$—⟨⟩—$COO$—$CH_2$—$\overset{*}{C}H(CH_3)$—$C_2H_5$ | ·73 | — | ·120 | ·127 | ·170 | · |
| No. 123 | $C_2H_5$—$\overset{*}{C}H(CH_3)$—$CH_2$—$O$—⟨⟩—$COO$—⟨⟩—$COO$—$CH_2$—$\overset{*}{C}H(CH_3)$—$C_2H_5$ | ·97 | — | — | — | ·164 | · |
| No. 124 | $C_5H_{11}$—⟨⟩—⟨⟩—$COO$—⟨⟩—$O$—2M4 ;  $C_5H_{11}$ | ·105 | — | — | ·149 | ·164 | · |
| No. 125 | (S) $C_8H_{17}O$—⟨⟩—⟨⟩—$COO$—⟨⟩—$\overset{*}{C}H(CH_3)$—$CH_2$—$OCO$—$C_6H_{13}$ | ·53 | — | — | — | — | · |
| No. 126 | $C_8H_{17}O$—⟨⟩—$CH_2O$—⟨⟩—$COO$—⟨⟩—$\overset{*}{C}H(CH_3)$—$CH_2$—$OCO$—$C_6H_{13}$ | ·1,10 | — | — | — | — | · |
| No. 127 | (2S,4S) $C_5H_{11}$—⟨⟩—⟨⟩—$OCH_2$—⟨lactone⟩—$\overset{*}{}$$CH_3$ | ·101 | — | — | (·54) | — | · |
| No. 128 | (2S,4S) $C_5H_{11}$—⟨⟩—⟨⟩—$OCH_2$—⟨lactone⟩—$\overset{*}{}$$C_4H_9$ | ·84 | — | — | — | — | · |

**Phase Transition Temperature (°C)**

C  : Crystal Phase
Sx : Smectic X phase
Sc : Smectic C phase

[ Table 1 ]

| Ferroelectric Liquid Crystal Compositions | | | |
|---|---|---|---|
| Compounds | Composition No. 201 | Composition No. 202 | Composition No. 203 |
| No. 101 | | 10.0 | |
| No. 102 | | 5.0 | |
| No. 103 | | 16.0 | |
| No. 104 | | 10.0 | |
| No. 105 | | 13.0 | |
| No. 106 | | 44.0 | |
| No. 107 | | | 24.0 |
| No. 108 | | | 12.2 |
| No. 109 | | | 12.5 |
| No. 110 | | | 11.9 |
| No. 111 | 9.4 | | |
| No. 112 | 29.4 | | |
| No. 113 | 10.6 | | |
| No. 114 | 9.5 | | |
| No. 115 | | | 1.4 |
| No. 116 | | | 4.7 |
| No. 117 | 4.8 | | 3.4 |
| No. 118 | | | 4.8 |
| No. 119 | | | 1.2 |
| No. 120 | 19.4 | | |
| No. 121 | 14.9 | | |
| No. 122 | | | 8.0 |
| No. 123 | | | 6.4 |
| No. 124 | | | 6.4 |
| No. 125 | | | 1.2 |
| No. 126 | | | 1.0 |
| No. 127 | | 2.0 | |
| No. 128 | 2.0 | | |

[ Table 2 ]

| Pretilt Angles | |
|---|---|
| Orientation Film | Pretilt Angles |
| PS-X-A-2001 (manufactured by Chisso Petrochemical Co. Ltd.) | 12 - 15° |
| PS-X-S-014 (manufactured by Chisso Petrochemical Co. Ltd.) | 1 - 2° |
| PVA | 0.5° |

An ITO film was formed on each of two glass substrates and a polyimide orientation film (LX-1400 made by Hitachi Chemical Co., Ltd.) was coated on each of them to be rubbed.

Then, the two glass substrates were laminated to each other that they can be rubbed in the same direction and in a cell thickness of 2 μm, and then the ferroelectric liquid crystal compositions shown in Table 1 were charged thereto. Then, the cell was heated to a temperature at which the liquid crystal compositions changed to isotropic liquid and then cooled down to room temperature at 1°C/min, thereby giving the ferroelectric liquid crystal element having a preferable orientation. Then, the ferroelectric liquid crystal element is disposed between polarizers crossing at right angles to measure response time, a tilt angle, a memory angle and a memory pulse width. Table 3 shows the results of the measurement. The response time is defined by measuring time required for the amount of transmitted light to increase from 0 to 50%, 0 to 90% and 10 to 90%, from the application of short waveform voltage of ±10v at 25°C. The tilt angle is defined as 1/2 of an angle formed between two quenching positions provided when the square waveform voltage is applied to the cell. The memory angle is defined as an angle formed between the two quenching positions provided when the electric field is not applied to the cell. In addition, the memory pulse width is defined as the minimum pulse width which permits switching by applying a pulse waveform voltage of ±10V at 25°C.

Example 2

An 1000 Å thick ITO film was formed on each of the two glass substrates, followed by forming a 500 Å thick $SiO_2$ insulating film. An orientation film shown in table 2 was further formed to grow it to a thickness of 400 Å by spin coating. Subsequently the film was rubbed with a rayon cloth in uniaxial orientation processing. The substrates were laminated to each other in the thickness of 20μm so that the rubbing direction in one substrate deviates from a parallel line from the rubbing direction in the other, thereby forming a liquid crystal cell. Then, a Merck Co.-made nematic liquid crystal E-8 was charged thereto, followed by measuring liquid crystal molecules from the substrate using a magnetic field capacity method. The results are shown in Table 3.

[Table 3 ]

| Comp. | Phase Transition Temperature (°C) $S_C$ | | $S_A$ | N | I | Response Speed(μsec) 0-50% | 0-90% | 10-90% |
|---|---|---|---|---|---|---|---|---|
| No.201 | ·40 | | ·95 | − | · | 172 | 254 | 154 |
| No.202 | ·44 | | ·68 | ·70 | · | 111 | 175 | 114 |
| No.203 | ·42 | | ·75 | ·91 | · | 426 | 875 | 650 |

| Comp. | Tilt Angle (deg) | Memory Angle (deg) | Memory pulse Width |
|---|---|---|---|
| No.201 | 15 | 9 | 180 |
| No.202 | 11 | 9 | 100 |
| No.203 | 19 | 10 | 350 |

Example 3

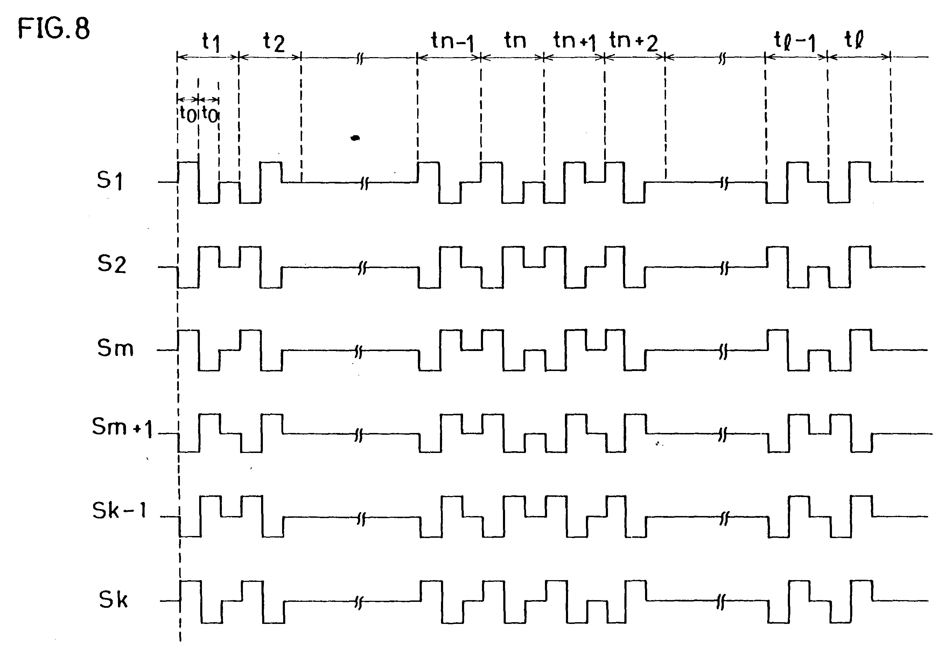

An active matrix type ferroelectric liquid crystal element having a structure shown in FIG. 8 was formed in the following process. A Ta film was formed on a substrate 1 formed of glass by sputtering to pattern it into a predetermined configuration, whereby 64 gate electrodes 2 were formed. A gate insulating film (SiNx film) 3, an (SiNx film) 5 were sequentially laminated by plasma CVD under reduced pressure to pattern the insulating film 5 into a predetermined configuration. Then, a phosphorus-doped $N^+$- amorphous-silicon film 14 formed by the plasma CVD, to pattern the $n^+$-amorphous-silicon film and the semiconductor film 4. Then, a Ti film was formed by sputtering to pattern the Ti film and the $n^+$-amorphous-silicon film 14 into a predetermined configuration, whereby 64 source electrodes 6 and drain electrodes 7 were formed. An ITO film was formed by sputtering to pattern it, whereby a pixel electrode 8 was formed.

The ITO film serving as a common electrode 11 was formed on another substrate by sputtering and then a Mo film serving as an opaque film 12 was formed by sputtering, followed by patterning it into a predetermined configuration.

A 500 Å thick $SiO_2$ insulating film was formed on each of the above substrates. Then, as an 400 Å thick orientation film, a PSI-X-A-2001 (polyimide made by Chisso Petrochemical Co., Ltd.) was formed by spin coating to rub the film with a rayon cloth in the uniaxial processing. Then the two substrates were laminated to each other so that the rubbing direction in one substrate might coincide with the other through a silica beads spacer at intervals of 2 μm using a epoxy resin sealing material. The ferroelectric liquid crystal composition No. 201 formed in the example 1 was charged to form an inlet between the substrates by charging technique, curing the inlet with an acrylic UV curing resin to form, a liquid crystal cell. Then, polarisers having polarizing axes crossing at right angles were arranged on upper and lower surfaces of the cell, so that one polarizing axis of the coincides with either one of optical axes of the liquid crystal of the cell, thereby providing a liquid crystal display.

The ferroelectric liquid crystal element thus formed had a C1U orientation on the whole surface except for a region of the C2 orientation surrounded by fine zigzag defects in a temperature region from a smectic C-smectic A transition point to the room temperature.

The ferroelectric liquid crystal element was driven by the driving method shown in FIG. 7, when it was driven at 25°C under $V_{G1}$= 10V, $V_{G2}$ = -15V, $V_S$ = 5V, $t_0$ = 360 μsec, and $t_1$ = 385μsec, a preferable display requiring only 24,6 msec for rewriting one screen was provided.

Example 4

An active matrix type ferroelectric liquid crystal element having a structure shown in FIG. 8 was formed in the same manner as in the example 3 except that the liquid crystal composition No. 202 was used in the place of the liquid crystal composition No. 201 used in Example 3.

The ferroelectric liquid crystal had a C1U orientation on the whole surface except for a region of the C2 orientation surrounded by small zigzag defects in a temperature region from a smectic C-smectic A transition point to the room temperature.

The ferroelectric liquid crystal element was driven by the driving method shown in FIG. 6. Although it was driven at 25°C under $V_{G1}$ = 10V, $V_{G2}$ = -15V, and $V_S$ = 5V using various values of $t_1$, bistable switching was not provided. However, it could be driven at 33°C or more, for example, when it was driven at 35°C under the conditions $V_{G1}$ = 10V, $V_{G2}$ = -15V, $V_S$ = 5V, $t_0$ = 14,4 msec for rewriting one screen.

Example 5

An active matrix type ferroelectric liquid crystal element having a structure shown in FIG. 8 was formed in the same manner as in Example 3 except that the liquid crystal composition No. 202 was used in the place of the liquid crystal composition No. 201 used in Example 3 and an orientation film PSI-X-S-04 (polyimide made by Chisso Petrochemical Co., Ltd.) was used in the place of the orientation film SI-X-A-2001 (polyimide made by Chisso Petrochemical Co., Ltd.).

The ferroelectric liquid crystal element had C2 orientation on the whole surface except for a region of the C1 orientation surrounded by fine zigzag defects at the room temperature.

The ferroelectric liquid crystal element was driven by the driving method shown in FIG. 6. When it was driven at 25°C under $V_{G1}$ = 10V, $V_{G2}$ = -15V, $V_S$ = 5V, $t_0$ = 200μsec, and $t_1$ = 225μsec, a preferable display requiring only 14.6 msec for rewriting one screen was provided.

Example 6

An active matrix type ferroelectric liquid crystal element having a structure shown in FIG. 8 was formed in the same manner as in Example 3 except that the liquid crystal composition No. 203 was used in the place of the liquid crystal composition No. 201 used in Example 3.

The ferroelectric liquid crystal element had C2 orientation of the whole surface except for a region of the C1 orientation surrounded by fine zigzag defects at the room temperature.

The ferroelectric liquid crystal element was driven by the driving method shown in FIG. 6. When it was driven at 25°C under $V_{G1}$ = 10V, $V_{G2}$ = -15V, VS = 5V, t0 = 700 μsec, and $t_1$ = 725 μsec, a preferable display requiring only 46.4msec for rewriting one screen was provided.

Example 7

An active matrix type ferroelectric liquid crystal element having a structure shown in FIG. 8 was formed in the same manner as in Example 3 except that the liquid crystal composition No. 203 was used in the place of the liquid crystal composition No. 201 used in Example 3 and the PVA was used in the place of the orientation film PSI-X-A-2001 (polyimide made by Chisso Petrochemical Co., Ltd.).

The ferroelectric liquid crystal element had C2 orientation on the whole surface except for a region of the C1 orientation surrounded by fine zigzag defects at the room temperature.

The ferroelectric liquid crystal element was driven by the driving method shown in FIG. 6. When it was driven at 25°C under $V_{G1}$ = 10V, $V_{G2}$ = -15V, $V_S$ = 5V, $t_0$ = 700 μsec, and $t_1$ = 725 μsec, a preferable display requiring only 46.4 msec for rewriting one screen, 46.4 msec was provided.

Example 8

The ferroelectric liquid crystal element formed in Example 4 was driven by the driving method shown in FIG. 8 under condition shown below. When it was driven at 25°C under $V_{G1}$ = 10V, $V_{G2}$ = -15V, $V_S$ = 5V, $t_0$ 360 μsec, and $t_1$

= 745μsec, a preferable display requiring only 47.7 msec for rewriting one screen was provided.

Example 9

The ferroelectric liquid crystal element formed in Example 4 was driven by the driving method shown in FIG. 8 under condition shown below.

Although it was driven at 25°C under $V_{G1}$ = 10 V, $V_{G2}$ = -15 V, and $V_S$ = 5V using various values of $t_1$, no bistable switching was provided. However, it could be driven at 33°C or more. For example, when it was driven at 35° under $V_{G1}$ = 10V, $V_{G2}$ = -15V, $V_S$ = 5V, $t_0$ = 200 μsec, a preferable display requiring only 27.2msec for rewriting one screen was provided.

Example 10

The ferroelectric liquid crystal element formed in Example 5 was driven by the driving method shown in FIG. 8 under conditions shown below.

When it was driven at 25°C under $V_{G1S}$ = 10V, $V_{G2}$ = -15V, $V_S$ = 5V, $t_0$ = 200 μsec, $t_1$ = 425 μsec, a preferable display requiring only 27.2 msec for rewriting one screen was provided.

Example 11

The ferroelectric liquid crystal element formed in Example 6 was driven by the driving method shown in FIG. 8 under conditions shown below.

When it was driven at 25°C under $V_{G1}$ = 10V, $V_{G2}$ =-15V, $V_S$ = 5V, $t_0$ = 700 μsec and $t_1$ = 1425 μsec, a preferable display requiring only 91.2 msec for rewriting one screen was provided.

Example 12

The ferroelectric liquid crystal display element formed in Example 7 was driven by the driving method shown in FIG. 8 under conditions below.

When it was driven at 25°C under $V_{G1}$ = 10V, $V_{G2}$ = -15V, $V_S$ = 5V, $t_0$ = 700 μsec and $t_1$ = 1425 μsec, a preferable display requiring only 91.2 μsec for rewriting one screen was provided.

According to this invention, there can be provided an active matrix type ferroelectric liquid crystal element capable of displaying a large volume of a wide visual angle, a high contrast images with high reliability.

While only certain presently preferred embodiments have been detailed, as will be apparent with those skilled in the art, certain changes and modifications can be made without departing from the scope of the invention as defined by the following claims.

**Claims**

1.  A method of driving a liquid crystal element comprising: -

    a plurality of scanning electrodes ($G_1...G_L$) and a plurality of signal electrodes ($S_1...S_K$) disposed in matrix configuration; and
    a liquid crystal cell having a pair of substrates (1) provided with a switching device having a first electrode (2) and a second electrode (6) at a crossing point of one of said scanning electrodes and one of said signal electrodes, and a liquid crystal (13) disposed within the liquid crystal cell; wherein said one scanning electrode is connected to the first electrode of the switching device and said one signal electrode is connected to the second electrode of the switching device;

    the method being characterised in that it is a method of driving a ferro-electric liquid crystal element; and in that said one scanning electrode transmits a signal to turn on the switching device, and said one signal electrode transmits a display signal to the liquid crystal cell while the switching device is turned on, the display signal comprising a first signal portion corresponding to a desired display of the liquid crystal cell and a second signal portion allowing the voltage applied to the liquid crystal cell to be reduced to 0V.

2.  A method of driving a liquid crystal element as claimed in claim 1 wherein the display signal is a binary signal having the first signal portion corresponding to a display and the second signal portion allowing the voltage applied to the liquid crystal cell to be reduced to 0V.

3. A method of driving a liquid crystal element as claimed in claim 1, wherein the display signal is a ternary signal consisting of the first signal portion corresponding to a display, a third signal portion having a polarity opposite to the polarity of the first signal portion, and the second signal portion allowing the voltage applied to the liquid crystal cell to be reduced to 0V.

## Patentansprüche

1. Verfahren zum Ansteuern eines Flüssigkristallelements, mit:

- einer Vielzahl von Abrasterelektroden ($G_1$ ... $G_L$) und einer Vielzahl von Signalelektroden ($S_1$ ... $S_K$), die matrix-förmig angeordnet sind; und
- einer Flüssigkristallzelle mit einem Paar Substrate (1), die mit einem Schaltbauteil mit einer ersten Elektrode (2) und einer zweiten Elektrode (6) am Überkreuzungspunkt zwischen einer der Abrasterelektroden und einer der Signalelektroden versehen sind, und mit einem Flüssigkristall (13), der innerhalb der Flüssigkristallzelle angeordnet ist; wobei die eine Abrasterelektrode mit der ersten Elektrode des Schaltbauteils verbunden ist und die Signalelektrode mit der zweiten Elektrode des Schaltbauteils verbunden ist;

**dadurch gekennzeichnet**, dass das Verfahren ein solches ist, bei dem ein ferroelektrisches Flüssigkristallelement angesteuert wird; und dass die eine Abrasterelektrode ein Signal zum Einschalten des Schaltbauteils überträgt und die eine Signalelektrode ein Anzeigesignal an die Flüssigkristallzelle überträgt, während das Schaltbauteil eingeschaltet ist, wobei das Anzeigesignal einen ersten Signalabschnitt, der einer gewünschten Anzeige der Flüssigkristallzelle entspricht, und einen zweiten Signalabschnitt umfasst, der es ermöglicht, die an die Flüssigkristallzelle angelegte Spannung auf 0 V herabzusetzen.

2. Verfahren zum Ansteuern eines Flüssigkristallelements nach Anspruch 1, bei dem das Anzeigesignal ein binäres Signal mit einem ersten Signalabschnitt, der einer Anzeige entspricht, und einem zweiten Signalabschnitt ist, der es ermöglicht, die an die Flüssigkristallzelle angelegte Spannung auf 0 V herabzusetzen.

3. Verfahren zum Ansteuern eines Flüssigkristallelements nach Anspruch 1, bei dem das Anzeigesignal ein ternäres Signal ist, das aus einem ersten Signalabschnitt, der einer Anzeige entspricht, einem dritten Signalabschnitt, der die zur Polarität des ersten Signalabschnitts entgegengesetzte Polarität aufweist, und einem zweiten Signalabschnitt besteht, der es ermöglicht, die an die Flüssigkristallzelle angelegte Spannung auf 0 V herabzusetzen.

## Revendications

1. Procédé d'excitation d'un élément à cristal liquide comprenant :

une série d'électrodes de balayage ($G_1$ ...$G_L$) et une série d'électrodes de signaux ($S_1$ ... $S_K$) disposées en configuration matricielle, et
une cellule à cristal liquide ayant deux substrats (1) pourvus d'un dispositif de commutation ayant une première électrode (2) et une deuxième électrode (6) au point de croisement de l'une desdites électrodes de balayage et de l'une desdites électrodes de signaux, et un cristal liquide (13) disposé à l'intérieur de la cellule de cristal liquide; procédé dans lequel ladite une électrode de balayage est connectée à la première électrode du dispositif de commutation et ladite une électrode de signal est connectée à la deuxième électrode du dispositif de commutation,
le procédé étant caractérisé en ce qu'il s'agit d'un procédé d'excitation d'un élément à cristal liquide ferroélectrique et en ce que ladite une électrode de balayage transmet un signal pour rendre passant le dispositif de commutation, et ladite une électrode de signal transmet un signal d'affichage à la cellule de cristal liquide tandis que le dispositif de commutation est passant, le signal d'affichage comprenant une première partie de signal correspondant à un affichage souhaité de la cellule de cristal liquide et une deuxième partie de signal permettant de réduire la tension appliquée à la cellule de cristal liquide à une valeur de 0 V.

2. Procédé d'excitation d'un élément à cristal liquide selon la revendication 1, dans lequel le signal d'affichage est un signal binaire dont la première partie correspond à un affichage et dont la deuxième partie permet de réduire la tension appliquée à la cellule de cristal liquide à une valeur de 0 V.

3. Procédé d'excitation d'un élément à cristal liquide selon la revendication 1, dans lequel le signal d'affichage est un signal ternaire constitué d'une première partie correspondant à un affichage, d'une troisième partie de polarité opposée à la polarité de la première partie de signal, et d'une deuxième partie qui permet de réduire la tension appliquée à la cellule de cristal liquide à une valeur de 0 V.

# FIG.1

⊙ ⊕ Direction of Spontaneous
      Polarization

$\hat{Z}$ :  Normal Line

$\hat{n}$ :  Longitudinal axis of liquid
      crystal molecule

θ :  Tilt Angle

FIG.2

## FIG. 3

G : Gate Electrode
S : Souce Electrode
D : Drain Electrode
Vcom : Common Electrode
LC : Liquid Crystal Capacitor

# FIG.4

to

Voltage applied on
Gate Electrode    OV

to

Voltage applied on
Souce Electrode    OV

Voltage applied on    OV
Liquid Crystal

Change of
Transmitted Light

# FIG.5

☒ black
☐ white

# FIG.6

(a)

(b)

FIG.7

FIG.8

# FIG.9

EP 0 542 518 B1

FIG.10

1

12    10    11    9    12

5    13

8    6  3  14  4  2  7    8  9  10

1

FIG.11

(a)

rubbing
direction

C1    C2    C1

θp

(b)

15 Lightening
defect

C2

C1

16 Hairpin
defect